# EUROPEAN PATENT APPLICATION

(11) **EP 2 374 760 A1**
(43) Date of publication of application: **12.10.2011**
(21) Application number: 11153949.0
(22) Date of filing: 10.02.2011
(51) Int. Cl.: C02F 1/04, C02F 1/44, C02F 103/08

(54) **Water desalination plant**

(30) Priority: 09.04.2010 IT TO20100270
(71) Applicant: Scam S.p.A., 10134 Torino (IT)
(72) Inventor: Garola, Gianfranco, I-10134 Torino (IT)
(74) Representative: Marchitelli, Mauro

(57) **Abstract**

A desalination plant (10) comprising a reverse-osmosis desalination assembly (16) having an inlet (24) supplied with a flow of salt water, a first outlet (26) for a flow of desalinated water, and a second outlet (28) for a flow of brine. The flow of brine coming from said second outlet (28) of the reverse-osmosis desalination assembly (26) is supplied to an evaporation desalination assembly (18).

## Description

### Field of the invention

The present invention relates to desalination plants, in particular for the production of drinking water and irrigation water for agricultural purposes.

The present invention has been developed in particular with the aim of supplying the demand of water of farms and industrial firms located in places where only water with high saline concentration is available, such as for example sea water or well brine water.

The present invention is not, however, limited to this specific field of use. In fact, the plants according to the present invention may be used in all the cases in which it becomes necessary to produce water with low saline content, eliminating or reducing drastically the dispersion in the environment of discharge waters with high concentration of salts (brine) .

### Description of the prior art

The plants currently used for the production of drinking water and for irrigation starting from sea water or well brine water are based upon reverse-osmosis technology. These plants envisage passing the sea water or the brine through osmotic membranes.

Plants of this type produce a flow of water with low saline content and a flow of brine with a concentration of salts much higher than that of sea water or of the original brine.

In currently existing plants the brine is discharged into the aquifer from which the water to be desalinated is taken or else is spread over the terrain. In either case, the environmental damage is very serious. When the brine is spread over the terrain vast areas of terrain coated with a crust of salt are created, which may no longer be used for agricultural purposes.

The discharge of the brine into the aquifer from which the water to be desalinated comes creates saline deposits on the bottom of the well or of the aquifer, which can lead to the obstruction of the well or of the aquifer. Many wells have been closed because they are clogged by the saline deposits. Furthermore, the discharge of the brine into the well increases concentration of salts in the water to be desalinated.

Also known are vacuum-evaporation desalination plants, used above all on watercraft and in industrial installations. The production of drinking water and of irrigation water by means of vacuum-evaporation technology is, however, disadvantageous from the economic standpoint, above all owing to the need to use large quantities of electrical energy for heating the water to be desalinated.

### Object and summary of the invention

The object of the present invention is to provide a plant for desalination of sea water or of well brine water that will enable production of large amounts of desalinated water at acceptable costs and without discharge of brine into the environment.

According to the present invention, said object is achieved by a desalination plant having the characteristics forming the subject of Claim 1.

The present invention envisages provision of a first reverse-osmosis desalination assembly, which produces a flow of drinking water and a flow of brine. The flow of brine is sent to a second desalination assembly of the evaporation type. The water produced by the evaporation desalination assembly can advantageously be mixed with water with a higher content of salinity to obtain irrigation water. The content of salinity in the irrigation water can be varied by varying the degree of mixing and can be adapted to the type of crops that are to be grown.

The evaporation desalination assembly is used for treatment of relatively low volumes of water so that the consumption of energy is decidedly lower than the case where the entire flow of drinking water is produced by means of evaporation. The evaporation desalination assembly downstream of the reverse-osmosis desalination assembly enables elimination of the discharge of brine into the environment.

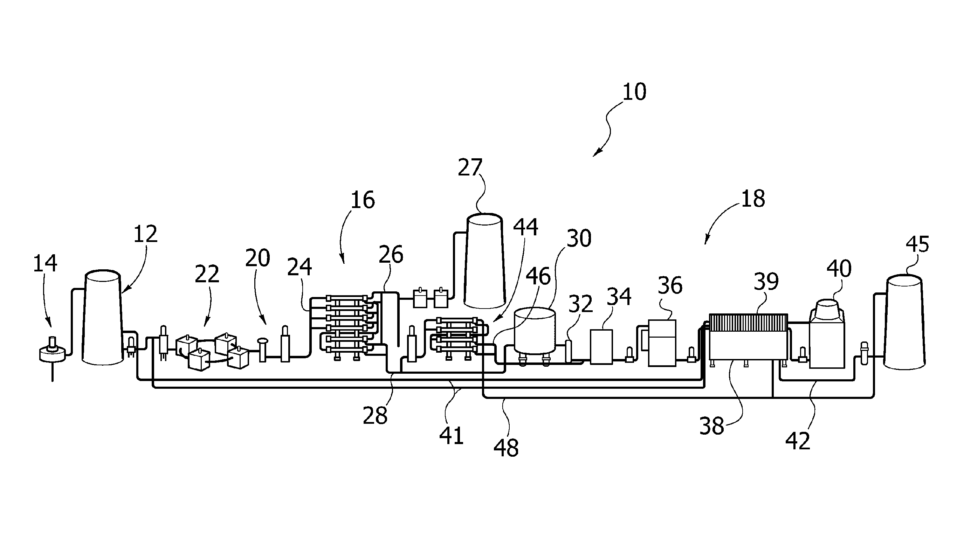

### Brief description of the drawing

The present invention will now be described in detail with reference to the attached drawing, which is provided purely by way of non-limiting example and illustrates a schematic view of a possible embodiment of a desalination plant according to the present invention.

### Detailed description of an embodiment of the invention

With reference to the attached drawing, designated as a whole by 10 is a plant for desalination of sea water or well brine water. The water to be desalinated is collected in a tank 12. In the example illustrated, the tank 12 contains brine taken from a well by means of a pumping unit 14.

The desalination plant 10 according to the present invention comprises a reverse-osmosis desalination assembly 16 and an evaporation desalination assembly 18 cascaded to the reverse-osmosis desalination assembly 16.

The water to be desalinated is taken from the tank 12 via a set of pumps 20. Preferably, upstream of the set of pumps 20 a filtering assembly 22 is located.

The reverse-osmosis desalination assembly 16 has an inlet 24, through which the flow of water to be desalinated is supplied, a first outlet 26, from which there comes out a flow of drinking water, and a second outlet 28, from which there comes out a flow of brine. The flow of drinking water coming from the first outlet 26 is collected in a first tank 27.

The flow of brine coming from the second outlet 28 of the reverse-osmosis desalination assembly 16 is sent to a tank 30, in which a chemical abatement is carried out by means of lime or specific products selected on the basis of the type of water treated. After the treatment in the abatement tank 30, the brine is passed through a filter and is collected in a brine tank 34 or sent to the auxiliary reverse-osmosis section 44. Next, the flow of brine is heated in a heater 36, for example to a temperature of approximately 50°C. Next, the flow of heated brine is sent to an evaporator 38. In the evaporator, conditions of sub-atmospheric pressure are maintained so that the water evaporates at a temperature of approximately 50°C. The water vapour is condensed in a condenser 39. The flow of condensed water exits from a line 42 and is collected in a second tank 45.

The condenser 39 is cooled by a flow of brine coming from the tank 12 via lines 41. The condenser 39 can be associated to a cooling tower 40.

Preferably, the plant 10 comprises an auxiliary reverse-osmosis desalination section 44, which takes a part of the flow of brine to the outlet 28 of the main reverse-osmosis desalination assembly 16 or from the tank 30. The auxiliary reverse-osmosis desalination section 44 has an outlet 46 for the brine, connected to the brine tank 34, and an outlet 48 for the desalinated water, which is sent to the tank 45. In the tank 45, the flow of water coming from the auxiliary reverse-osmosis desalination section 44 and the flow of water coming from the evaporation desalination assembly 18 are mixed. By varying the mixing ratio it is possible to vary the degree of salinity of the water contained in the tank 45.

The water contained in the first tank 27 can be used as drinking water. This water can have a content of salinity, for example in the region of 60 ppm. The water contained in the second tank 45 can be used as irrigation water. The content of salinity of the water contained in the second tank 45 can be varied to obtain the optimal salinity for the type of crops to be irrigated. For example, the salinity of the irrigation water contained in the second tank 45 may range from 260 to 3000 ppm.

The plant 10 according to the present invention eliminates the discharge into the environment or into the well of residual water (brine) with an extremely high concentration of salts. Thanks to the present invention, the risk of clogging of the wells or of the aquifers caused by the accumulation of the saline residue is prevented. Advantageously, the present invention makes available two or more reservoirs of water with different salinity for use as drinking water and as irrigation water, distilled water, and industrial water.

Of course, without prejudice to the principle of the invention, the details of construction and the embodiments may vary widely with respect to what has been described and illustrated herein, without thereby departing from the scope of the invention as defined by the ensuing claims.

## Claims

1. A desalination plant (10), comprising a reverse-osmosis desalination assembly (16) having an inlet (24) supplied with a flow of salt water, a first outlet (26) for a flow of desalinated water, and a second outlet (28) for a flow of brine, said plant being **characterized in that** the flow of brine coming from said second outlet (28) of the reverse-osmosis desalination assembly (26) is supplied to an evaporation desalination assembly (18).

2. The desalination plant according to Claim 1, **characterized in that** it comprises an auxiliary reverse-osmosis desalination section (44), which produces a flow of desalinated water that is mixed to the flow of water produced by said evaporation desalination assembly (18).

3. The desalination plant according to Claim 2, **characterized in that** said auxiliary desalination section (44) is supplied with a part of the flow of brine coming from the second outlet (28) of said reverse-osmosis desalination assembly (16).

4. The desalination plant according to Claim 1, **characterized in that** said evaporation desalination assembly (18) comprises a tank (30) for chemical abatement of the flow of brine coming from said reverse-osmosis desalination assembly (16).
